# EUROPEAN PATENT APPLICATION

(11) **EP 1 351 217 A1**
(43) Date of publication of application: **08.10.2003**
(21) Application number: 01273207.9
(22) Date of filing: 28.12.2001
(51) Int. Cl.: G10K 15/02, H04N 7/173, G06F 13/00, G06F 3/16, H04M 11/08, H04M 1/00

(54) **MUSIC DISTRIBUTION-COMPATIBLE PORTABLE TERMINAL AND PORTABLE TERMINAL**

(30) Priority: 12.01.2001 JP 2001005187; 12.01.2001 JP 2001005476
(71) Applicant: MATSUSHITA ELECTRIC INDUSTRIAL CO., LTD., Kadoma-shi, Osaka 571-0050 (JP)
(72) Inventor: TAKAHASHI, Nobuyuki, Hachioji-shi, Tokyo 193-0824 (JP); ISHIZUKA, Toshiyuki, Yokohama-shi, Kanagawa 240-0051 (JP)
(74) Representative: Grünecker, Kinkeldey, Stockmair & Schwanhäusser Anwaltssozietät
(86) International application number: JP0111660
(87) International publication number: WO02056294

(57) **Abstract**

A first problem of the present invention is to improve an user-friendly operability when a portable type wireless terminal apparatus is used as a music-delivery-available portable type terminal apparatus. Also, a second problem of the present invention is to provide a portable terminal apparatus capable of displaying thereon image data related to music data.

To solve the above-described first problem, a music-delivery-available portable terminal apparatus (1) connected via a network by way of a wireless manner to a music delivery server which stores thereinto compressed musical data, for downloading the musical data to reproduce the downloaded musical data, displays a download interrupted mark on a screen (2) in the case that the above-described downloading operation is interrupted. Also, the music-delivery-available portable terminal apparatus (1) automatically performs the connection to the network by way of the wireless manner when the above-described downloading operation is interrupted so as to restart downloading operation of musical data after the interruption of the downloading operation from the music delivery server. As a result, a user can readily download target musical data without paying his attention to such a fact as to whether or not the downloading operation of the target musical data is accomplished.

Also, in order to solve the above-explained secondproblem, in a storage medium (18a) of a portable terminal apparatus (10), musical data (52), and both image data (54) and text data (56), which are related to this musical data (52), are downloaded to be stored. The image data (54) corresponds to a jacket image, an image of an artist, and an image of a sales advertisement, whereas the text data (56) corresponds to a music note and the like. A display unit (20) can display the image data (54) and the text data (56), which are attached to this musical data (52). Also, since the portable terminal apparatus (10) can automatically display the image data (54) and the text data (56) in conjunction with reproducing operation of the musical data (52), the user can confirm the image data (54) and the text data (56) while listens to music.

## Description

### Technical Field

The present invention is related to a music-delivery-available portable terminal apparatus for suitably receiving/reproducing a music delivery as to portable type wireless terminal apparatus, and also, is related to a technique capable of displaying image data in aportable terminal apparatus for reproducing music data, or for recording/reproducing music data.

### Background Art

Since communication speeds of networks are considerably increased and also high-quality compression techniques of musical data are progressed, there is a trend that network music delivery services are popularized. Several network business activities are commenced by which musical data are marketed via the Internet by a pay system, while improving protection of copyrights.

Conventionally, in such a case that a user purchases musical data by utilizing this network music delivery service and then listens to the purchased musical data, this user initiates a personal computer used at his home, and accesses a server of a music delivery system by connecting this personal computer to the Internet. Then, the user searches musical data which is wanted to be purchased and downloads this searched musical data. Then, when the user listens to this musical data, the user starts musicplaying software corresponding to software for compressing the music data, and reproduces the musical data from a speaker connected to the personal computer.

Also, such a case will now be considered. That is, in a recording/reproducing apparatus such as, for example, an MD (Mini Disc: registered trademark) which records/reproduces musical data, the musical data is record, or reproduced. Under such a condition that an audio data output of a CD reproducing machine is connected to the recording/reproducing apparatus by way of a cable, or the like, a music CD is reproduced by the CD reproducing machine, and the outputted audio data is recorded on the recording/reproducing apparatus. Then, the musical data recorded on the recording/reproducing apparatus is reproduced in accordance with reproducing operation of the recording/reproducing apparatus, and then, a piece of music is reproduced from a headphone, or the like, which is connected to the recording/reproducing apparatus.

Also, in the case that a display device is provided with a recording/reproducing apparatus, when recorded musical data is reproduced, a number of music is indicated on this display device. Since the recorded musical data is such a data used for an acoustic output, a title, an artist name, and the like of the music are not indicated on the display device without any modification. As a consequence, in such a case that the title, the artist name, and the like of the music are wanted to be indicated, this title information and the like are inputted (recorded) in correspondence with the recorded musical data, so that when the musical data is reproduced, both the title and the artist name of the music may be indicated on the display device.

As previously explained, in the case that the conventional network music delivery service is utilized, the user of the service is required to perform such an operation that every time the music delivery service is utilized, the user starts the personal computer to be connected to the Internet. There is a problem that the user cannot easily utilize such a network music delivery service. Also, in such a case that the user wishes to enjoy the downloaded musical data by using a portable player, there is another problem that a memory which has stored thereinto the music data is inserted into the portable player, which causes cumbersome operations.

The above-described problems may be solved by that a music delivery service is utilized by a wireless terminal apparatus such as a portable telephone, and also a simple type portable telephone which is known as the PHS (registered trademark). However, in portable type wireless terminal apparatus, other problems may occur which are specific to these portable type wireless terminal apparatus. That is to say, a line happens to be cut out due to conditions of wireless electromagnetic waves while musical data is downloaded, a battery is depleted, and a user is moved outside a delivery service area.

Also, although the conventional recording/reproducing apparatus is capable of displaying the title and the artist name of the entered music piece in correspondence with the musical data, this conventional recording/reproducing apparatus owns no such a function capable of displaying thereon image data related to the musical data. Furthermore, the conventional recording/reproducing apparatus does not also own such a function capable of displaying image data which is downloaded in combination with the musical data, and is related to this musical data.

As a result, there is such a problem that even if both the musical data and the image data related to this musical data are present, the image data cannot be displayed in the conventional recording/reproducing apparatus.

The present invention has been made to solve the above-described problems of the background art, and has a first object to provide a music-delivery-available portable terminal apparatus capable of improving a user-friendly operability when a music delivery service is utilized by a portable type wireless terminal apparatus.

Also, a second object of the problem is to provide a portable terminal apparatus capable of displaying image data related to musical data.

### Disclosure of the Invention

To achieve the above-described first object, a music-delivery-available portable terminal apparatus of the present invention is featured by:
(1) a music-delivery-available portable terminal apparatus connected via a network by way of a wireless manner to a music delivery server which stores thereinto compressed musical data, for downloading the musical data to reproduce the downloaded musical data, wherein: the music-delivery-available portable terminal apparatus is comprised of: display means for displaying thereon a download interrupt mark in the case that the downloading operation of the musical data is interrupted.
(2) The music-delivery-available portable terminal apparatus of the present invention is featured by such a music-delivery-available portable terminal apparatus connected via a network by way of a wireless manner to a music delivery server which stores thereinto compressed musical data, for downloading said musical data to reproduce the downloaded musical data, wherein: the music-delivery-available portable terminal apparatus is comprised of: means for automatically connecting the music-delivery-available portable terminal apparatus to the network by way of said wireless manner in such a case that the downloading operation of the musical data is interrupted so as to restart downloading operation of remaining musical data after the downloading operation is interrupted from the music delivery server.
(3) The music-delivery-available portable terminal apparatus of the present invention is featured by that in the case that the interruption of the downloading operation happens to occur since the music-delivery-available portable terminal apparatus is moved from a location inside a delivery service area to another location outside the delivery service area, the automatic connection to the network is automatically carried out when the music-delivery-available portable terminal apparatus is entered from the location outside the delivery service area to the location inside the delivery service area so as to restart the downloading operation of the musical data from the music delivery server. Also, in the case that said interruption of the downloading operation happens to occur since a battery mounted thereon is depleted, the automatic connection to the network is automatically carried out while the battery is being charged, or after the battery has been charged so as to restart the downloading operation of the music delivery server. Furthermore, the music-delivery-available portable terminal apparatus is comprised of: means for restarting downloading operation in a manual operation instead of the restarting of the downloading operation which is automatically carried out by the interruption of the downloading operation of the musical data.
(4) The music-delivery-available portable terminal apparatus of the present invention is featured by such a music-delivery-available portable terminal apparatus connected via a network by way of a wireless manner to a music delivery server which stores thereinto compressed musical data, for downloading the musical data to reproduce the downloaded musical data, wherein: the music-delivery-available portable terminal apparatus is comprised of: means operated in such a manner that when the interruption of the downloading operation of the musical data happens to occur since another site connected to said network is viewed while the musical data is downloaded, downloading operation of a remaining part of the musical data is automatically restarted within empty time of downloading the viewed data.

In accordance with the above-described music-delivery-available portable terminal apparatus, in such a case that an interrupt event happens to occur while the musical data is downloaded, the interrupt mark is indicated. As a result, the user can recognize that the downloading operation is interrupted, and can restart the downloading operation in the manual manner. Also, since the portable terminal apparatus is arranged in such a manner that the downloading operation of the remaining part of the musical data is automatically restarted, the user is no longer required to execute the restarting operation of the downloading operation, and furthermore, is no longer needed to confirm the completion of the downloading operation, so that the user-friendly operability may also be improved.

In addition, as to the restarting operation of the downloading operation, the musical data is not downloaded from the beginning part of this musical data, but also only the remaining part of this musical part may be merely downloaded. As a result, both the communication time and the cost, which are paid for the musical data portions which have already been downloaded, are not wasted, so that the cost may be reduced.

Also, a portable terminal apparatus, according to the present invention, used to achieve the above-explained second object, is featured by:
(1) a portable terminal apparatus capable of reproducing, or capable of recording/reproducing musical data, comprising:
   a storage unit which has stored thereinto both the musical data downloaded from a host server which constitutes a music delivery source, and image data which is related to the musical data downloaded in combination with the musical data;
   a control unit for reading out the image data stored in the storage unit; and
   a display unit for displaying thereon the image data read out from the control unit.

   In accordance with this portable terminal apparatus, both the musical data downloaded from the host server which constitutes the music delivery source, and the image data which is related to the musical data downloaded in combination with the musical data are read out from the storage unit, and then, these musical data and image data can be displayed on the display unit.
   In the case that the downloaded image data corresponds to image data which is related to, for instance, a jacket image, an image of an artist, and an image of a sales advertisement, concerning the musical data, the user of the portable terminal apparatus can refer to this image data by displaying the image data on the display unit.
(2) The portable terminal apparatus of the present invention is featured by that the control unit reads out the image data in conjunction with a reproduction of the musical data stored in the storage unit, and displays the read image data on the display unit.
   In accordance with this portable terminal apparatus, in conjunction with the reproducing operation of the musical data, the image data can be automatically displayed on the display unit. As a consequence, the musical data is merely reproduced without executing such a specific operation that the image data is reproduced, so that the image data can be displayed. Also, while the user reproduces the musical data, the user can confirm the image data by the display unit at the same time.
(3) The portable terminal apparatus of the present invention is featured by that the portable terminal apparatus is comprised of: a designation unit operated in such a manner that when the image data corresponds to a plurality of still image data, or a plurality of moving picture data, or a mixture of still image data and moving picture data, the designation unit designates said image data which is read out from said storage unit by the control unit.
   In accordance with this portable terminal apparatus, in the case that the image data corresponds to a plurality of image data (still image data, or moving picture data, or a mixture of still image data and moving picture data), the designation unit can designates the image data which is read out from the storage unit by the control unit. In other words, the image data designated by the designation unit can be displayed.
   As a consequence, in the case that there are plural image data, such an image data which is wanted to be displayed by the user can be designated from these image data. Accordingly, the user can display the desirable image data.
(4) The portable terminal apparatus of the present invention is featured by that the designation unit designates either one or a plurality of the image data.
   In accordance with this portable terminal apparatus, either one or plurality of such image data which are wanted to be displayed can be designated by the designation unit.
   In this case, when a plurality of image are designated, the image data which are wanted to be displayed can be designated in the group mode. In this case, a plurality of image data may be represented in a list, or may be separately switched to be displayed on the display unit.
(5) The portable terminal apparatus of the present invention is featured by that the portable terminal apparatus is comprised of: a selection unit operated in such a manner that when text data related to music such as a note of the musical data other than the image has been stored in the storage unit, the image data, or the text data is selectable; and wherein:
   in the case that the text data is selected in the selection unit, the control unit reads out the text data instead of the image data, and displays the read text data on the display unit.
   In accordance with this portable terminal apparatus, such text data which has been stored in the storage unit and is related to the music piece such as the music note can be displayed on the display unit. As a result, the user can confirm the music note of the musical data by the text data displayed on the display unit. Also, in the case that while the music data is reproduced, the text data is displayed on the display unit, the user can confirm the music note and the like in combination with the music.
(6) The portable terminal apparatus of the present invention is featured by that the portable terminal apparatus is comprised of: a reception unit for receiving both the musical data and the image data in a wireless manner; and wherein: the control unit records both the musical data and the image data, which are received by the reception unit, on the storage unit.
   In accordance with this portable terminal apparatus, both the musical data and the image data, which are received by the reception unit in the wireless manner, can be recorded in the storage unit. As a consequence, the portable terminal apparatus itself can download both the musical data and the image data into the storage unit, and also, can reproduce the musical data as well as can display the image data. Also, such an apparatus used to download is not separately required. Moreover, if the portable terminal apparatus is located within the receivable range, even when the portable terminal apparatus is being moved, both the musical data and the image data can be recorded in the storage unit by employing the portable terminal apparatus. As a consequence, the freedom degree as to the place used to download may be increased, so that no specific limitation is made in a specific location.
(7) The portable terminal apparatus of the present invention is featured by that the storage unit is a storage medium which is detachably mounted with respect to the portable terminal apparatus.

In accordance with this portable terminal apparatus, since the storage unit is such a storage medium which is detachably mounted with respect to the portable terminal apparatus, this storage medium is placed by another storage medium, so that both musical data and image data, which have been stored in this storage medium, may be reproduced. Also, since a storage medium having a recordable region (capacity) is mounted on this portable terminal apparatus, both voice data and image data may be newly recorded thereon.

### Brief Description of the Invention

Fig. 1 is a front view of a music-delivery-available portable terminal apparatus according to a first embodiment of the present invention, and a diagram for showing a stereo earphone and a memory card, which are connected to this music-delivery-available portable terminal apparatus;
Fig. 2 is a diagram for indicating an example of a top menu screen when the music-delivery-available portable terminal apparatus is connected to a music delivery server;
Fig. 3 is a diagram for showing an example of a screen when the music-delivery-available portable terminal apparatus is connected to the music delivery server so as to download musical data;
Fig. 4 is a diagram for exemplifying a download interrupt mark;
Fig. 5 is a diagram for exemplifying a download restart screen;
Fig. 6 is a diagram for exemplifying a download restarting confirmation screen;
Fig. 7 is a diagram for exemplifying a setting screen of automatic download restarting operation;
Fig. 8 is a diagram for exemplifying a download interrupt confirmation screen;
Fig 9 is a front view and a block diagram as to a peripheral portion of a display unit of a portable terminal apparatus according to a second embodiment of the present invention; Fig. 9(a) is the front view for indicating both the display unit and an operation unit of the portable terminal apparatus, and Fig. 9(b) is the block diagram for representing an internal arrangement of the portable terminal apparatus;
Fig. 10 is a structural diagram for indicating a data structure;
Fig. 11 is a diagram for indicating a transmission/reception network;
Fig. 12 is an explanatory diagram for indicating a method for designating a piece of music; Fig. 12(a) is a diagram for showing a menu screen related to a storage medium 18a, Fig. 12(b) is a diagram for representing a PLAYLIST list, and Fig. 12(c) is a diagram for indicating a music list within PLAYLIST;
Fig. 13 is an explanatory diagram for explaining an image data display method; Fig. 13(a) is a diagram for representing a selection menu, and Fig. 13 (B) is a diagram for showing a displayed image;
Fig. 14 is an explanatory diagram for indicating a text data display method; Fig. 14(a) is a diagram for showing a selection menu, and Fig. 14(b) is a diagram for denoting a displayed text;
Fig. 15 is an explanatory diagram for showing a music piece information data display method; Fig. 15(a) is a diagram for indicating a selection menu, and Fig. 15(b) is a diagram for representing displayed music piece information;
Fig. 16 is a diagram for denoting a designation of image data; and
Fig. 17 is an explanatory diagram for indicating switching operation of display screens when musical data is reproduced.

It should be noted that reference numerals shown in the drawings are given as follows: "1" shows a music-delivery-available portable terminal apparatus; "2" indicates a liquid crystal screen; "3" represents an operation button group; "4" denotes an antenna; "5" shows a memory card; "6" is a stereo earphone; "10" indicates a portable terminal apparatus; "12" represents an antenna; "14" denotes a transmission/reception unit; "16" shows a control unit; "18" indicates a storage unit; "18a" shows a storage medium; "20" represents a displayunit; "30" denotes an operation unit; "30a" shows a navigation key; "30b" denotes a first button; "30c" indicates a second button; "50" is a package header; "52" represents musical data; "54" shows image data; "56" denotes text data; "58" represents music piece information data; "70" is a base station; "72" shows a communication network; "74" denotes a host server; and "76" indicates a computer.

### Best mode for Carrying Out the Invention

### [FIRST EMBODIMENT]

Referring now to drawings, a first embodiment of the present invention will be described.

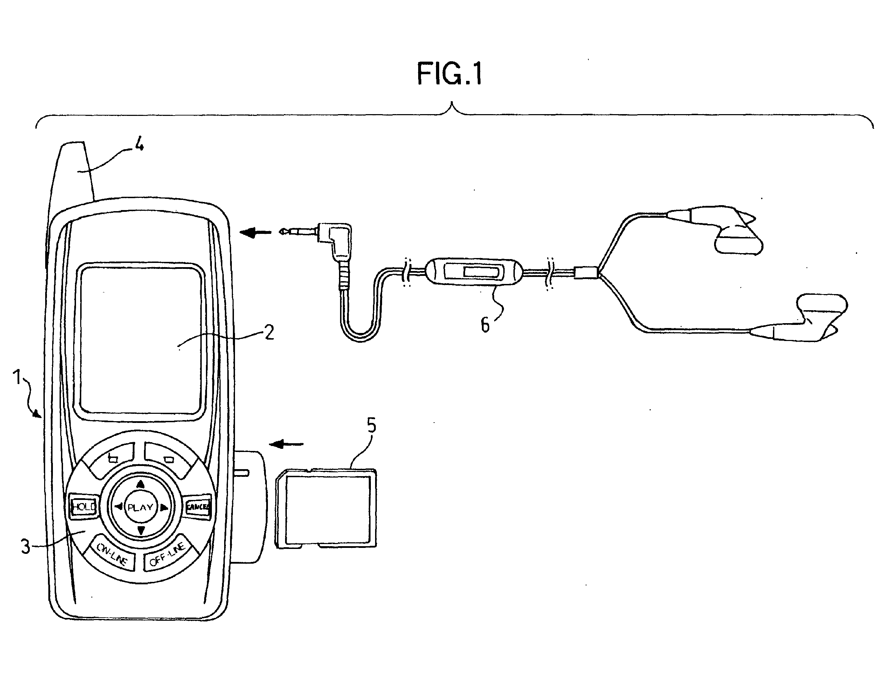

Fig. 1 is a front view of a music-delivery-available portable terminal apparatus according to a first embodiment of the present invention. This music-delivery-available portable terminal apparatus 1 includes a liquid crystal screen 2 for a display purpose, and an operation button group 3. The music-delivery-available portable terminal apparatus 1 accesses via a base station (not shown) to a server of a music delivery system by employing an antenna 4 by way of a wireless manner, so that musical data can be downloaded by way of the wireless communication. The access operation to the music delivery server is carried out in such a manner that a telephone number of this server is dialed by using a simple type portable telephone function, and both an ID number and a password are entered after a line connection is established. As to entries of these ID number and password, when both the ID number and the password are entered at first time, these data may be set in such a manner that these data are stored. In the case that both the ID number and the password are set to be stored, these ID number and password need not be entered during access operations subsequent to the first access operation.

The downloaded musical data is stored into a memory card 5, which is detachably mounted on the music-delivery-available portable terminal apparatus 1. The musical data stored in this memory card 5 is reproduced by a CPU (not shown), and then, the reproduced music may be heard by a stereo earphone 6, a commercially-available headphone, and the like.

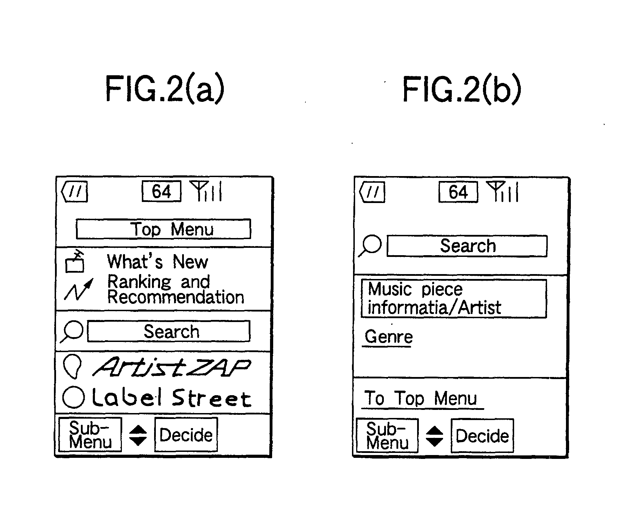

Fig. 2(a) shows a top menu screen produced when the music-delivery-available portable terminal apparatus 1 is used to be connected to a music delivery server. In the case that musical data is downloaded, first of all, the operation button group 3 is manipulated to select "search" in order to select a piece of music. As a result, the top menu screen is advanced to a search screen of Fig. 2(b), and then, music piece information such as a name of an artist, and a genre is entered on this search screen by employing the operation button group 3 to find out target musical data.

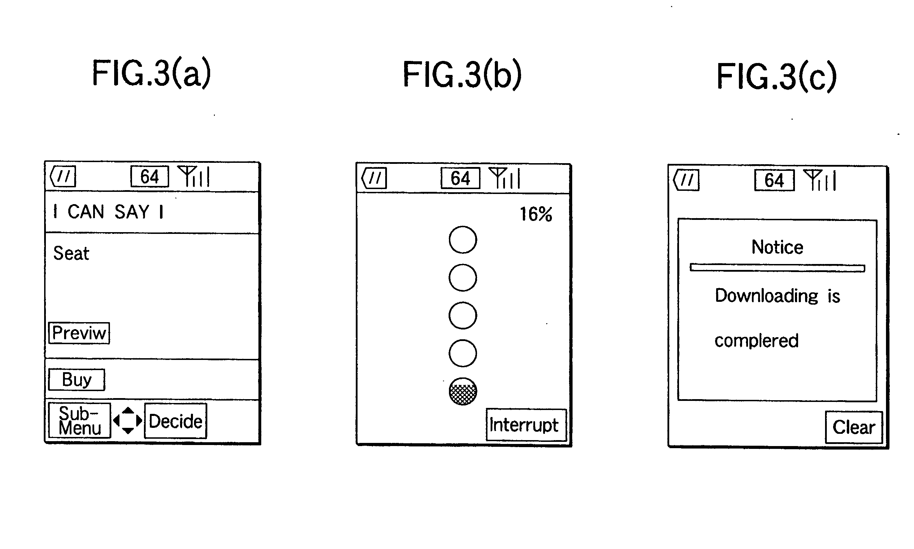

Fig. 3(a) shows a screen when the target musical data can be searched. In the case that a user of a music delivery service purchases the musical data by employing the screen of Fig. 3(a), the user selects "buy" and enters "decide." As a result, a download operation is commenced. During the download operation, a screen of Fig. 3(b) is represented on the liquid crystal screen 2 of the music-delivery-available portable terminal apparatus 1. On this screen, an approximated ratio (%) of the downloaded musical data is indicated by using both a numeral number and a graph. When the downloading operation of the musical data is completed, a screen of Fig. 3(c) is displayed, which notifies the completion of the downloading operation. When the user who has confirmed this screen depresses a "line cut" button contained in the operation button group 3, the line is cut out. However, even when the user does not know the completion of the downloading operation due to handling of other aspects, if a predetermined time duration, for example, 1 minute has elapsed after the completion of the downloading operation, then the line is automatically cut out.

In such a case that musical data is downloaded by way of a wireless communication by employing the music-delivery-available portable terminal apparatus 1, there is a storage capacity of approximately 5 MB per one piece of music. As a consequence, while the musical data is downloaded, there are some possibilities that since electromagnetic wave conditions are deteriorated, a user is moved out of a delivery service area, or a battery power source is depleted, a line is cut out, and thus the musical data cannot be downloaded.

As to downloading operation of musical data, after an entire portion of the musical data has been downloaded, this musical data can be reproduced. Even when the musical data has been partially downloaded, this musical data cannot be reproduced. Therefore, in such a case that the downloading operation is interrupted due to the above-described aspects while this musical data is partially downloaded, the downloading operation of this musical data need be again carried out. However, if this musical data is again downloaded from the stating parts thereof, then it is a waste of communication time and of a charge required for line connection time thereof. This fact may impede popularization of the music delivery system according to this embodiment.

As a consequence, in accordance with this embodiment, with respect to downloading operation of the same musical data, which is carried out after the downloading operation has been firstly interrupted until a predetermined time has passed, for example within 24 hours, only such musical data related to the musical data portion after the interruption of this downloading operation is downloaded. This downloaded musical data portion is coupled to such a musical data portion which has already been downloaded in the memory card 5 before this interruption of the downloading operation. Then, the coupled musical data portions are stored into the memory card 5. As a result, both the communication charge and the communication time are not wasted, which occurred before the above-described interruption of the downloading operation.

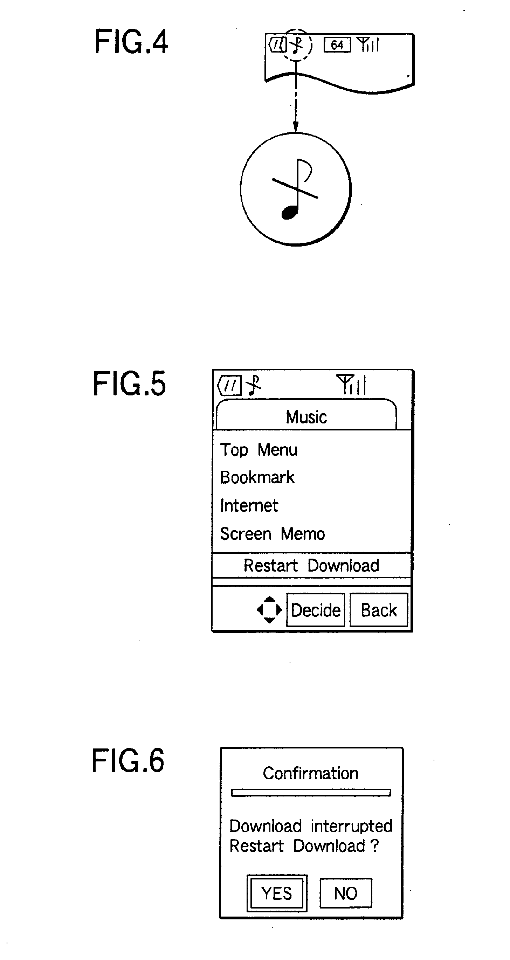

If the user does not become aware of an occurrence of such an event that the downloading operation of the musical data is interrupted but the downloading operation thereof may be restarted, then the following opportunity may occur. That is, as explained above, 24 hours has elapsed, and thus, the user must download the musical data from the first music part. As a consequence, in the music-delivery-available portable terminal apparatus 1 of this embodiment, when the interruption of the downloading operation happens to occur, as represented in Fig. 4, a download interrupt mark (namely, such a mark that musical note is cut off in illustrated example) is displayed adjacent to a battery-remaining-amount indicating mark which is displayed at an upper left corner of the uppermost stage of the liquid crystal display screen 2. The user can recognize that the interruption of the downloading operation happens to occur under which the downloading operation of the musical data maybe restarted by viewing this download interrupt mark. Also, since this download interrupt mark is displayed during the above-described 24 hours, the user also can recognize that the downloading operation of the musical data may be restarted if this download interrupt mark is being displayed.

In such a case that while the download interrupt mark is displayed, the user again accesses the server of the music delivery system in a manual manner, a screen shown in Fig. 5 is displayed. Since a menu of "restart download" is prepared on this screen, the user may selectively operate this "restart download" menu, so that restarting of the downloading operation is commenced. In the case that the system is arranged in such a manner that the above-explained time duration of "24 hours" is separately counted on the server and also on the terminal apparatus, there are some possibilities that a slight temporal shift may be produced between the server and the terminal apparatus. Thus, even just after the download interrupt mark is not displayed on this terminal apparatus, if the "restart download" menu shown in Fig. 5 is still left when the user accesses the server, then restarting of the downloading operation is available.

Since such a function is provided, user-friendly operability of the music-delivery-available portable terminal apparatus 1 may be furthermore improved. This function causes the user to set as to whether the downloading operation is restarted in the manual manner, or the automatic manner. For instance, when the music-delivery-available portable terminal apparatus 1 is located outside a delivery service area (including such a case that electromagnetic wave condition is deteriorated) while the downloading operation of the musical data is carried out, a screen indicated in Fig. 6 is displayed which inquires as to whether or not the downloading operation is restarted in the manual manner. At this time, after the user is moved to such a place where the electromagnetic wave condition may become better, the user manually selects "YES", and thus, both an automatic access to the server is carried out, and the menu of "restart download" of Fig. 5 is automatically selected, so that the downloading operation may be restarted.

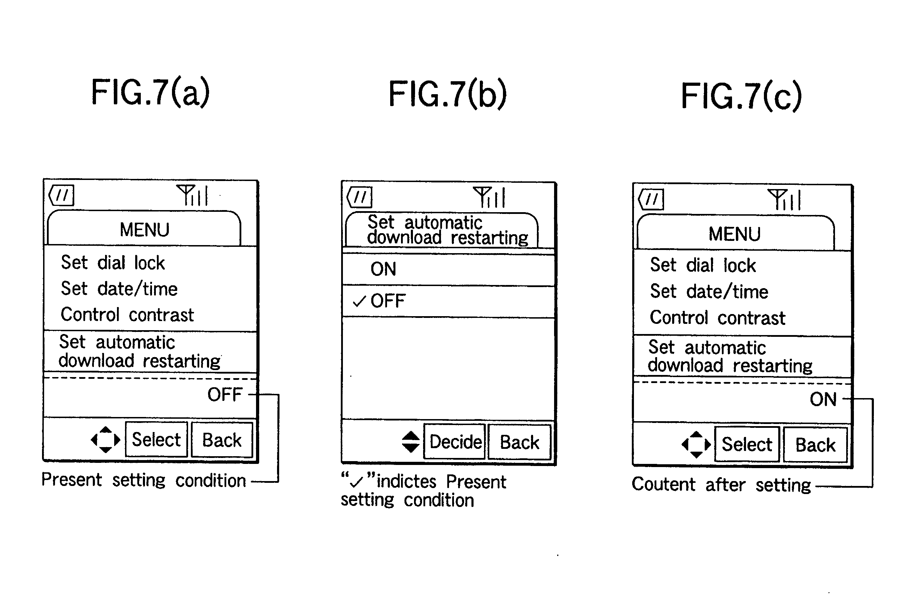

However, if the user turns ON a menu "set automatic restarting" on setting screens of the terminal apparatus shown in Fig. 7(a), 7(b), 7(c), then such a message "download is interrupted, and wait for restarting of automatic download operation " is displayed instead of the screen shown in Fig. 6 when the user is located outside the delivery service area while the musical data is downloaded. The terminal apparatus 1 judges as to whether or not the musical data can be downloaded since the user is moved inside the delivery service area, and automatically restarts the downloading operation. As a result, when the user turns ON the automatic restart setting operation, the user can download target musical data while this user executes other works without paying his attention to such a fact that the user is located outside, or inside the delivery service area. In this case, for example, another setting operation may be alternatively carried out in such a manner that when the line connection of the automatic download restarting operation fails by a preselected time, the automatic download restarting operationis ended. Even when the automatic download restarting operation is accomplished, if the present time is located within the above-described time duration of 24 hours, then the user may restart the downloading operation in the manual manner.

In the case that the battery is depleted during downloading operation, such an indication "recharge battery" is displayed on the terminal screen 2, and if the recharging operation of the battery is not commenced within 1 minute, then the power supply is automatically turned OFF, so that the downloading operation is interrupted. When the recharging operation is commenced within 1 minute, the downloading operation is also continued during this recharging operation. However, if the recharging operation is not commenced, it is brought into such a download interruption under which the downloading operation may be restarted. In this case, when the battery is recharged and then the communication is available, the terminal apparatus automatically accesses the server, so that the downloading operation is restarted.

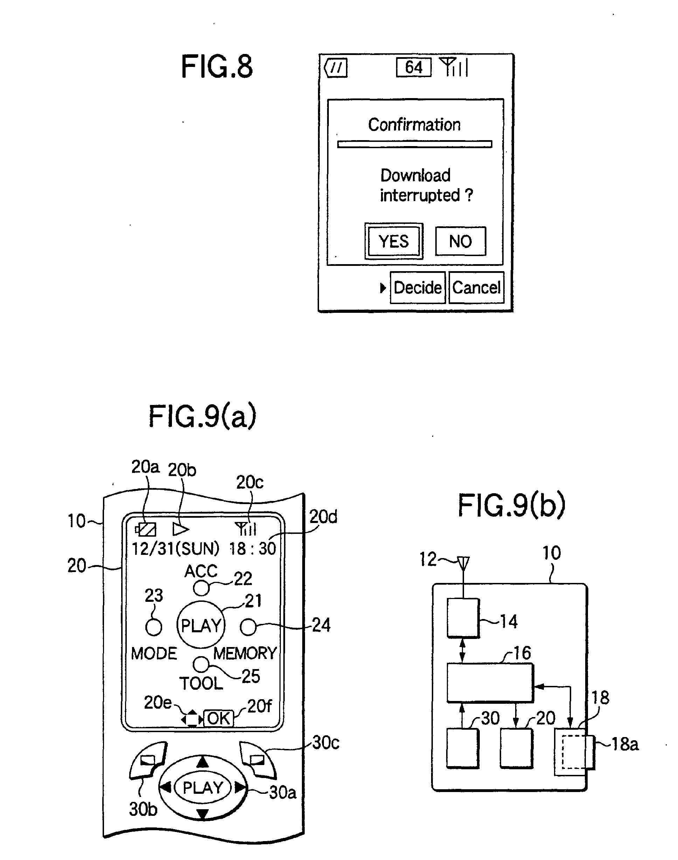

There is such a case that an event happens to occur by which the user wants to interrupt the downloading operation while this downloading operation is carried out, and thus, the user himself interrupts this downloading operation. As to this interruption of the downloading operation, there are two cases. That is, the line is cut out to interrupt the downloading operation, and also while the line is still connected, the downloading operation is interrupted. For instance, when the music-delivery-available portable terminal apparatus 1 must be used as a speech communication terminal due to an occurrence of an urgent event while the downloading operation is carried out, if the downloading line is not cut out, then a line used for the speech communication cannot be connected. In this case, when the user depresses a "line cut" button during the downloading operation, a confirmation screen shown in Fig. 8 is displayed. When "YES" is selected, the line is cut out, and also the download interrupt mark shown in Fig. 4 is displayed.

A case that the downloading operation is interrupted without cutting out the line corresponds to such a case that while the downloading operation is carried out, the user is advanced to another site of this network and wishes to view this site. In this case, the user may enter an URL of the site to which the user wants to be advanced, or may select an URL to which a book mark has already been marked. Also in this case, while the interrupt mark shown in Fig. 4 is displayed, the user is advanced to another site. Then, as previously explained, the downloading operation is restarted in the manual manner.

It should also be noted that when the user is advanced to view a site, downloading operation of a view screen of this site is accomplished, and while the user views this view screen, even when the line is still connected, the line is not busy condition. As a consequence, while the user views the view screen, the terminal apparatus may be set in such a manner that the downloading operation of the musical data is automatically restarted in the background by utilizing this not-busy condition.

Also, there is another case that while musical data is downloaded, the user wishes to download another musical data. In this case, the user depresses a "cancel" button contained in the operation button group 3. As a result, a screen similar to that of Fig. 8 is displayed, and when "YES" is selected, the downloading operation is interrupted, so that such a screen is displayed in which an interrupt mark is added to the screen of Fig. 2(a). On this screen, the user searches another musical data and downloads the searched musical data. If this downloading operation of the searched musical data is not yet commenced, then the downloading operation of the musical data under interruption condition may be restarted. However, after the downloading operation of another musical data has been started, the new musical data is overwritten on the musical data under interruption condition of the downloading operation, so that the downloading operation of the musical data under interruption cannot be restarted.

As previously described, in the music-delivery-available portable terminal apparatus 1 according to this embodiment, since the interruption of the downloading operation is displayed by the interrupt mark, the user can confirm this interruption of the downloading operation, and thus, can recognize the necessity of restarting of the downloading operation. Also, since the music-delivery-available portable terminal apparatus 1 is arranged in such a manner that the downloading operation can be automatically restarted, and furthermore, only the remaining portion of the musical data may be merely downloaded, the user-friendly operability of the music delivery system can be improved.

It should also be understood that the above-described music-delivery-available portable terminal apparatus of this embodiment has been exemplified as the terminal apparatus having the simple type portable telephone function. Alternatively, a third-generation portable telephone and a fourth-generation portable telephone may be employed as the terminal apparatus.

### [Second Embodiment]

Referring now to drawings, a second embodiment of the present invention will be described.

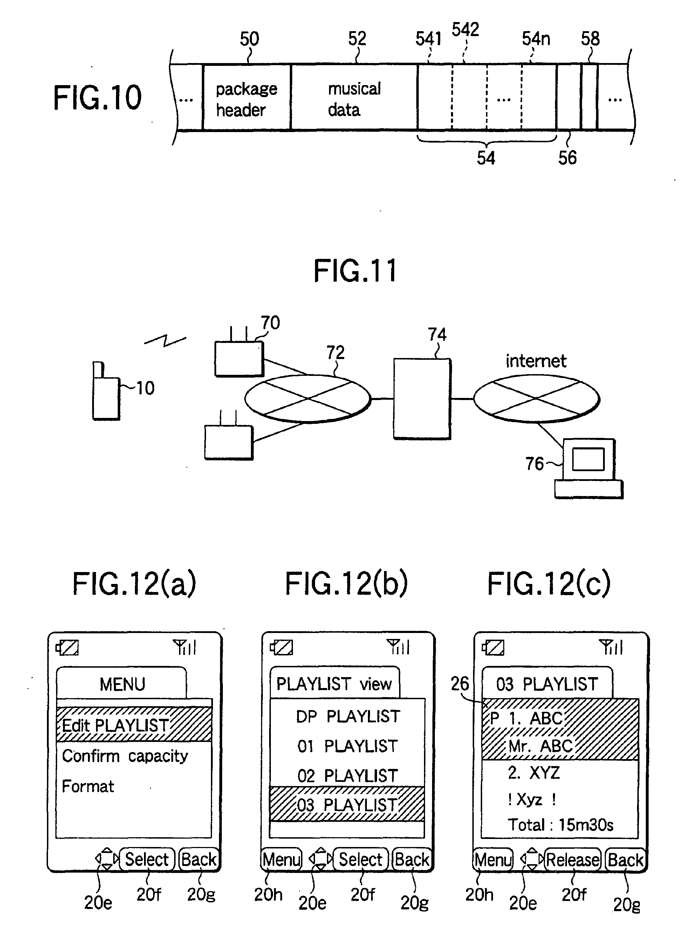

Fig 9 is a front view and a block diagram as to a peripheral portion of a display unit of a portable terminal apparatus according to this embodiment. Fig. 10 is a structural diagram for indicating a data structure. Fig. 11 is a diagram for indicating a transmission/reception network.

First, a description is made of an arrangement of a portable terminal apparatus 10 according to this embodiment with reference to Fig. 9.

Fig. 9(a) is the front view for indicating both the display unit and an operation unit of the portable terminal apparatus, and Fig. 9(b) is the block diagram for representing an internal arrangement of the portable terminal apparatus.

The portable terminal apparatus 10 is arranged by an antenna 12, a transmission/reception unit 14, a control unit 16, a storage unit 18, a display unit 20, and an operation unit 30 (see Fig. 9(b)). The antenna 12 is used to transmit/receive a wireless signal between the own portable terminal apparatus 10 and a communication apparatus such as a base station. The transmission/reception unit 14 demodulates a reception signal receivedby this antenna 12, andmodulates a transmission signal. The control unit 16 controls the respective units employed inside the portable terminal apparatus 10. The storage unit 18 stores thereinto musical data, and image data, text data and music piece information data, which are related to this musical data. The display unit 20 displays thereon image data and other displayable data. The operation unit 30 corresponds to such a means for operating the portable terminal apparatus 10 and for inputting data. Also, both the above-described antenna 1 and transmission/reception unit 14 correspond to a reception unit defined in a scope of claim for a patent.

Furthermore, peripheral portions of the button of the operation unit 30 correspond to a direction designation button function for designating upper/lower/right/left directions. This operation unit 30 is arranged by an integral type navigation key 30a having a button function at a button center portion, a first button 30b corresponding to a push button, and a second button 30c corresponding to a push button. Also the above-described operation unit 30 corresponds to both a designation unit and a selection unit, which are defined in the scope of claim for the patent.

Then, the storage unit 18 may be realized as a storage apparatus built in the portable terminal apparatus 10. However, in this embodiment, this storage unit 18 is explained as a storage medium 18a which is detachably mounted with respect to the portable terminal apparatus 10. Although not shown in this drawing, this storage medium 18a is constructed by that, for instance, longitudinal/transverse sizes of a package outer shape are defined by 24mm X 32mm, and a thickness of this package outer shape is approximately 2mm, and also a plurality of contact terminals are equipped on a package edge portion. These plural contact terminals are employed so as to be connected to a power supply line and a signal line of the portable terminal apparatus 10. Also, a controller, and a flash memory connected to this controller are contained in this storage medium 18a. This controller is employed so as to communicate with the control unit 16 of the portable terminal apparatus 10. Musical data, image data, text data, and the like are stored into this flash memory.

As explained above, the storage medium 18a stores thereinto the musical data which is downloaded from a host sever constituting a music delivery source, and also, stores thereinto both the image data and the text data, which are downloaded in combination with this musical data, and are related to this musical data. Furthermore, the storage medium 18a owns a capacity (region) used to download/record these musical/image/text data.

Now, all data structures containing the musical data will be explained with reference to Fig. 10.

The overall data structure containing the musical data is constituted by a package header 50 located at a data head, musical data 52 corresponding to data used for acoustic outputs, image data 54, text data 56, and music piece information data 58. This package header 50 indicates header information indicative of both an attribute of data and a data structure. The image data 54 corresponds to, for example, a jacket image, an image of an artist, and an image of a sales advertisement, and are related to the musical data 52. The text data 56 indicates, for example, the words of the musical data 52, and is related to the musical data 52. The music piece information data 58 represents a title and an artist name of the musical data 52.

It should also be noted that in this embodiment, the image data 54 is constituted by plurality of still image data 541, 542 to 54n. Alternatively, the image data 54 may be constituted by a plurality of moving picture data, or may be constituted by mixing still image data with mixing picture data, or may be arranged by one piece of still image data, or may be arranged by one piece of mixing picture data.

Also, all of these data shown in Fig. 2 indicate such a case that the image data 54 and the text data 56 are present in combination with the musical data 52. Alternatively, all of these data shown in Fig. 2 may represent such a case that only the music data 52 is present, both the musical data 52 and the image data 54 are present, or both the musical data 52 and the text data 56 are present.

Next, a description will now be made of a network structure used to transmit/receive these data with reference to Fig. 11.

Since the portable terminal apparatus 10 executes a wireless communication with respect to the base station 70, even when this portable terminal apparatus 10 is moved, a data communication can be carried out between the own portable terminal apparatus 10 and a host server 74 which is connected via both the base station 70 and the communication network 72.

All of the data (image data 54, text data 56, music piece information data 58) which contain the above-explained musical data and image data are stored in the host server 74 every music. Since the portable terminal apparatus 10 and another communication apparatus connectable to the communication network 72 performs data communications (access), titles of music may be viewed, a musical part of the musical data 52 may be heard, and all of the data including the musical data 52 every music may be downloaded.

Also, since the host server 74 is also connected to the Internet, the portable terminal apparatus 10 may be connected via the host server 74 to the Internet, and may access a desirable home page and the like by designating a URL (Uniform Resource Location) and the like. It should be understood that since the host server 74 is also connectable to a computer 76 which is connected via the Internet to this host server 74, even when this computer 76 is employed, titles of music may be viewed, a musical part of the musical data 52 may be heard, and all of the data including the musical data every music may be downloaded.

The description is returned to the display unit 20 of the portable terminal apparatus 10.

The display unit 20 is, for instance, a color liquid crystal display device, andmay change a displayed content under control of the control unit 16. In Fig. 9(a), an initial menu screen of the portable terminal apparatus 10 is displayed as one example. Alternatively, the image data 54, the text data 56, the music piece information data 58, and the like may be displayed.

First, a description will now be made of the initial menu screen of the display unit 20. Apower supply pictorial (pict.) 20a corresponds to an indicator which indicates that a remaining energy amount of the power supply is continuously displayed when the power supply of the portable terminal apparatus 10 is turned ON. A condition pictorial 20b shows a reproducing condition of the musical data 52 in the portable terminal apparatus 10. An electromagnetic wave condition pictorial 20c shows a strength of an electromagnetic wave received by the antenna 12. A day/time indication 20d represents a month, a day, a week, and time.

A reproduction mark 21 corresponds to a display button used to reproduce the musical data 52. An access mark 22 corresponds to a display button used to access from the portable terminal apparatus 10 to the host server 74. A mode mark 23 corresponds to a display button used to set a communication mode of the portable terminal apparatus 10. A memory mark 24 corresponds to a display button employed so as to display/edit a content record on the storage medium 18a. A tool button 25 corresponds to an indication button used to set various setting modes of the portable terminal apparatus 10.

Furthermore, a direction pictorial 20e shows such a condition that a direction may be designated by a navigation key 30a. A decision/set pictorial 20f represents an indication corresponding to a depression button function of a center button portion of the navigation key 30a. Although not shown in Fig. 9(a), a first pictorial corresponding to the first button 30b is displayed in a left-sided display area of the direction pictorial 20e, and also, a second pictorial corresponding to the second button 30c is displayed in a right-sided display area of the decision/set pictorial 20f.

The pictorial displays of the decision/set pictorial 20f and the first/second pictorials are changed in the respective screens displayed on the display unit 20. Function pictorials which are allocated to the navigation key 30a, the first button 30b, and the second button 30c are displayed on the respective screens.

In Fig. 9(a), since both the direction pictorial 20e and the decision/set pictorial 20f are displayed, any one of the reproduction mark 21, the access mark 22, the mode mark 23, the memory mark 24, and the tool button 25 may be selected by operating the navigation key 30a. Also, as to a selected mark, a circle of this selected mark becomes larger than those of other marks (reproduction mark 21 is selected in Fig. 9(a)).

Under this condition, in such a case that the reproduction mark 21 is determined to reproduce the musical data 52, the push button (OK button) of the center button portion on the navigation key 30a is pushed. In this case, for example, in the case that plural pieces of the musical data 52 are stored in the storage medium 18a, the reproducing operation of the music piece is commenced in accordance with an order of these musical data which are downloaded from the host server 74. Alternatively, after the downloading operations have been accomplished, the music order may be arbitrarily designated, and then, the music piece may be reproduced in accordance with this designated music order.

The foregoing descriptions are related to the functions of the respective units and the basic indications of the display unit 20 employed in the portable terminal apparatus 10.

### [Displays of Image Data, Text Data, and Music Piece Information Data]

Referring now to Fig. 12 to Fig. 15, a description is made of displaying of the image data 54, the text data 56 and the music piece information data 58 in the case that the musical data 52, and also, the image data 54, the text data 56 and the music piece information data 58, which are related to this musical data 52, have been stored in the storage medium 18a of the portable terminal apparatus 10.

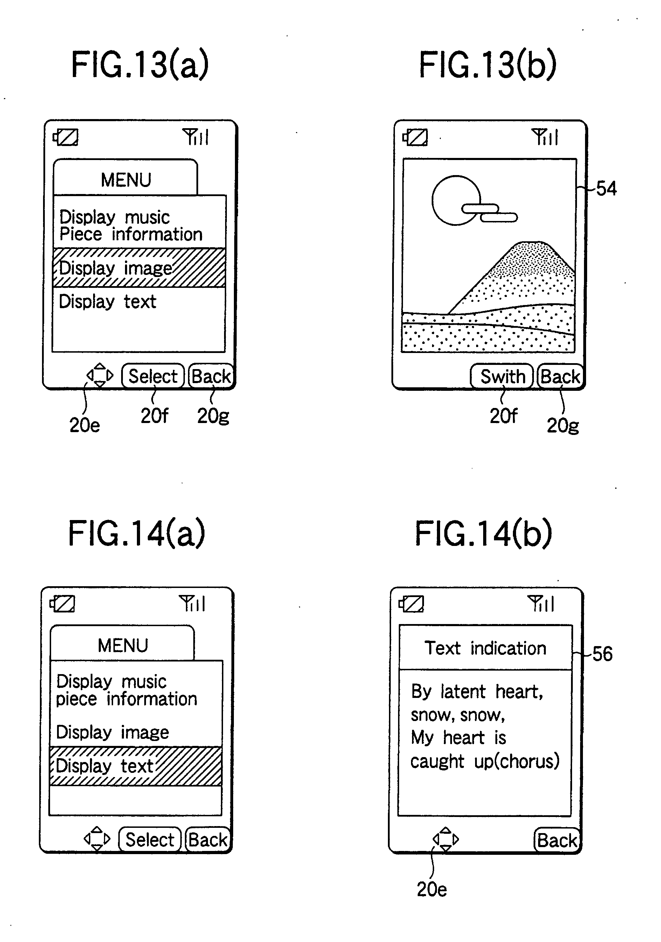

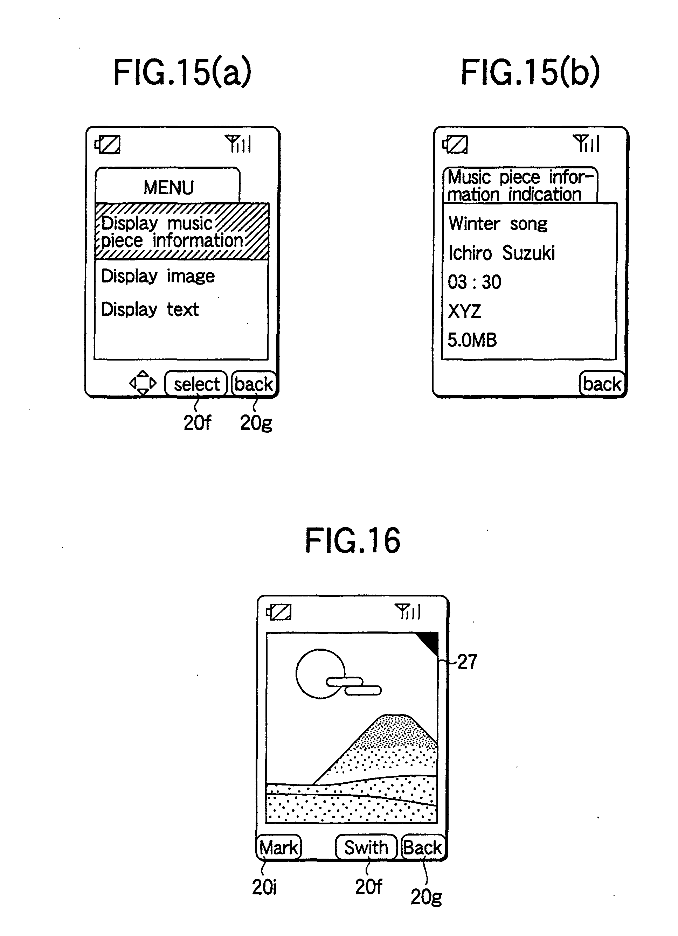

Fig. 12 is an explanatory diagram for indicating a method for designating a piece of music. Fig. 13 is an explanatory diagram for explaining an image data display method. Fig. 14 is an explanatory diagram for indicating a text data display method. Fig. 15 is an explanatory diagram for showing a music piece information data display method.

First of all, a description is made of a method for selecting from a list, the musical data 52 containing the image data 54 (similarly, containing text data 56, and music piece information data 58) with reference to Fig. 12.

Fig. 12 (a) is a diagram for showing a menu screen related to a storage medium 18a, Fig. 12 (b) is a diagram for representing a PLAYLIST view, and Fig. 12(c) is a diagram for indicating a music list within PLAYLIST. It should be noted that when the memory mark 24 is selected/determined in Fig. 9(a), the menu screen shown in Fig. 12(a) is displayed.

The menu screen shown in Fig. 12(a) is such a screen by which a music order of the storage medium 18a can be edited, a memory capacity can be confirmed, and a format of the memory can be selectively designated. In this drawing, a menu "PLAYLIST edit" is selected (diagonal portion) . In this case, when the push button of the center portion in the navigation key 30a is pushed, "select" located in the decide/set pictorial 20f is carried out, so that this menu screen is changed into the screen shown in Fig. 12(b) on which the PLAYLIST view is displayed.

In this case, a symbol "PLAYLIST" implies a list indicative of an order of reproducing music pieces. A symbol "DP" shown at the uppermost position of the PLSYLIST view corresponds to such a PLAYLISTs on which a sequence of downloading the music data has been recorded. Subsequently, symbols "01" to "03" of PLAYLIST correspond to such PLAYLISTs in which the user of the portable terminal apparatus 10 has separately designated an order of reproducing music pieces.

Next, for example, when PLAYLIST of symbol "03" (namely, inclined portion) is selected, the screen shown in Fig. 12(c) is displayed. It should also be noted that a first pictorial of Fig. 12(b) corresponds to a menu pictorial 20h, and a second pictorial corresponds to a back pictorial 20g. The menu pictorial 20h is a function capable of displaying a selection menu (will be discussed later), and the menu pictorial 20g is a function capable of back to one-succeeding display screen.

In Fig. 12(c), a music piece list contained in PLAYLIST is displayed. For example, names of music pieces and names of artists are displayed in the order of music piece reproducing operations. It should be noted that an image data existing mark 26 ("P") is indicated on the left side of the music piece reproducing order "1". This image data existing mark 26 indicates that the image data 54 is attached to this music piece.

Under this condition, a music piece may be selected in the music piece list along upper/lower directions. Then, under such a condition that the music piece of the music piece reproducing order "1" is selected (namely, diagonal line portion), when the menu pictorial 20h is selected by depressing the first button 30b, the screen shown in Fig. 13(a) is subsequently displayed.

Fig. 13 (a) is a diagram for representing a selection menu, and Fig. 13(b) is a diagram for showing a displayed image.

When a menu "display image" is selected (diagonal line portion) in Fig. 13(a), as represented in Fig. 13(b), the image data 54 attached to the musical data 52 of the reproducing order "1" selected in the above manner can be displayed. Also, in the case that there are plural pieces of the image data 54, a plurality of these image data 54 maybe switched to be displayed by depressing the push button of the center portion of the navigation key 30a corresponding to the decision/set pictorial 20f (in this case, "switching" pictorial).

Also, instead of the display of the above-described image data 54, either the text data 56 or the music piece information data 58 may be similarly displayed. This display will now be explained with reference to Fig. 14 and Fig. 15. Fig. 14 (a) is a diagram for showing a selection menu, and Fig. 14(b) is a diagram for denoting a displayed text. Fig. 15(a) is a diagram for indicating a selection menu, and Fig. 15(b) is a diagram for representing displayedmusic piece information.

It should also be noted that since image displays until the music piece is designated (see Fig. 12) are similar to the above-explained displays of the image data 54, explanations thereof are omitted.

As indicated in Fig. 14(a), when a menu "text select" (diagonal line portion) is selected from the selection menu, as shown in Fig. 14(b), for example, a music note of the musical data 52 is displayed by way of a text. This displayed music note may be displayed in a scrolling manner along upper/lower directions by designating the directions of the navigation key 30a.

Also, as represented in Fig. 15(a), when a menu "music piece information display" (diagonal line portion) is selected from the selection menu, as shown in Fig. 15(b), music piece information such as a title, an artist name, recording time, a name of a record firm, and sizes of all data involving the musical data 52, is displayed from a top position.

### [Displays of Image Data and Others While Musical Data is Reproduced]

The portable terminal apparatus 10 also owns a function by which while the musical data 52 is reproduced, the image data 54 related to the musical data 52 under reproduction is automatically reproduced.

In the above-described menu screen of Fig. 13(b), after certain image data 54 is displayed, this menu screen is back to such a condition represented in Fig. 9(a) by using the back pictorial 20g, and thereafter the reproducing operation of music piece is commenced. Then, when the music piece designated in Fig. 12 is reproduced, the finally displayed image data 54 is automatically displayed on the display unit 20 in Fig. 13(b).

As a result, while the user reproduces the musical data 52, this user can confirm the image data 54 by the display unit 20 at the same time.

Also, instead of the display of Fig. 13(b), for example, as such a display indicated in Fig. 16, the image data 54 which is wanted to be displayed during the reproducing operation of the musical data 52 may be designated. Subsequently, this designation method will now be explained.

Fig. 16 is a diagram for indicating a designation of image data.

In Fig. 16, a different point from the designation method of the image data 54 shown in Fig. 13(b) is such a point that a marking pictorial 20i is set to the first pictorial. In this case, while the image data 54 is switched/displayed, the image data 54 which is wished to be displayed may be designated by the marking pictorial 20i (namely, first button 30a is. depressed). For instance, a marking 27 which is designated at a right corner is displayed on the designated image data 54. Then, in connection with the reproducing operation of the musical data 52, this marked image data 54 is detected, and this detected image data 54 is displayed on the display unit 20.

Also, when this marking 27 is designated to a plurality of image data 54, a plurality of such image data 54 may be designated while the musical data 52 is reproduced. In this case, the plural pieces of these image data 54 which have been designated while the musical data 52 is reproduced may be switched by a switching means to be displayed. Alternatively, a plurality of designated image data 54 may be displayed in a list form as demagnified screens (thumbnail screens).

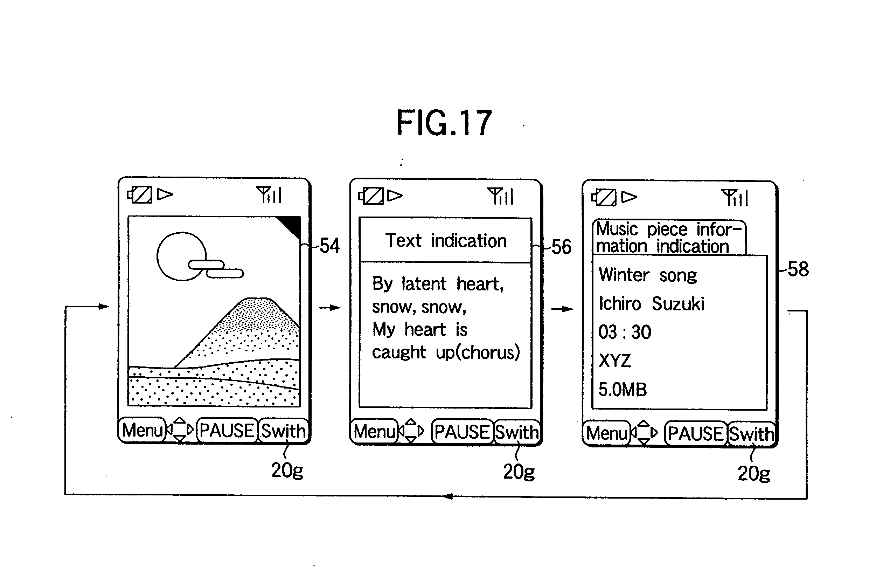

In the foregoing descriptions, while the musical data 52 is reproduced, the image data 54 which is related to the musical data 52 under reproduction is automatically reproduced. In the portable terminal apparatus 10, either the text data 56 or the music piece information data 58 may be reproduced instead of this image data 54 which is automatically reproduced. This alternative case will now be described with reference to Fig. 17.

Fig. 17 is an explanatory diagram for indicating switching operation of display screens when musical data is reproduced.

When the image data 54 is displayed while the music data 52 is reproduced, a screen of the display unit 20 becomes such a screen shown in the left side of this drawing. In this case, when the switching pictorial 20g (namely, second button 30c) is selected, the text data 56 is subsequently displayed. Furthermore, when the switching pictorial 20g is selected, the music piece information data 58 is displayed. Then, in addition, when the switching pictorial 20g is selected, the display screen is back to the display of the image data 54.

As previously explained, in the case that there are the image data 54, the text data 56, and the music piece information data 58, which are related to the musical data 52, these image maybe switched to be displayed. However, when the image data 54 and the text data 56 are not present, no screen-switching operation to this screen is carried out.

In other words, since the second button 30c is selected while the musical data 52 is reproduced, the user may switch the image data 54, the text data 56, or the music piece information data 58 to display the switched data while listens to the musical data. As a consequence, even when the musical data 52 is reproduced, the user may confirm the image data 54, the text data 56, and the music piece information data 58.

In the above-described embodiment, the musical data 52 and the image data 54 maybe downloaded (recorded) to the storage medium 18a by the portable terminal apparatus 10. Alternatively, these musical/image data may be downloaded to the storage medium 18a by such a computer 76 which is connectable to the host server 74 via the Internet. More concretely speaking, a memory writer used to record data on the storage medium 18a is connected to the computer 76, and the storage medium 18a is inserted into the memory writer so as to be mounted thereon, so that the computer 76 may record the musical data and the image data on the storage medium 18a.

Also, the storage medium 18a on which the data downloaded by the computer 76 in the above-described manner has been recorded may be reproduced by the portable terminal apparatus 10.

While the present invention has been described in detail with reference to the specific embodiments, it is apparent by a person having ordinarily skill in the art that the present invention may be modified, changed, and substituted without departing from the technical scope and spirit of the present invention.

The present patent application is made based upon Japanese Patent Application No. 2001-5187 filed on January 12, 2001, and also, Japanese Patent Application No. 2001-5476 filed on January 12, 2001, the contents of which have been taken herein as a reference.

### Industrial Applicability

In accordance with the present invention, since the music-delivery-available portable type terminal apparatus having the better user-friendly operability can be provided, the music delivery system can be furthermore popularized.

Also, in accordance with the present invention, both the musical data which has been downloaded from the host server constituting the music delivery source, and also the image data which is related to the musical data and has been downloaded in combination with the musical data can be read out from the storage unit, and then, can be displayed on the display unit.

In the case that the downloaded image data corresponds to image data which is related to, for instance, a jacket image, an image of an artist, and an image of a sales advertisement, concerning the musical data, the user of the portable terminal apparatus can refer to this image data by displaying the image data on the display unit.

## Claims

1. A music-delivery-available portable terminal apparatus connected via a network by way of a wireless manner to a music delivery server storing compressed musical data, for downloading said musical data to reproduce the downloaded musical data, said music-delivery-available portable terminal apparatus comprising:
display means for displaying a download interrupt mark in the case that said downloading operation of the musical data is interrupted.

2. A music-delivery-available portable terminal apparatus connected via a network by way of a wireless manner to a music delivery server which stores thereinto compressed musical data, for downloading said musical data to reproduce the downloaded musical data, said music-delivery-available portable terminal apparatus comprising:
means for automatically connecting said music-delivery-available portable terminal apparatus to said network by way of said wireless manner in such a case that said downloading operation of the musical data is interrupted to restart downloading operation of remaining musical data after said downloading operation is interrupted from said music delivery server.

3. The music-delivery-available portable terminal apparatus as claimed in claim 2,
wherein, in the case that said interruption of the downloading operation happens to occur since the music-delivery-available portable terminal apparatus is moved from a location inside a service area to another location outside the service area, said automatic connection to the network is automatically carried out when the music-delivery-available portable terminal apparatus is entered from the location outside the service area to the location inside the service area so as to restart said downloading operation of the musical data from said music delivery server.

4. The music-delivery-available portable terminal apparatus as claimed in claim 2,
wherein, in the case that said interruption of the downloading operation happens to occur since a battery mounted thereon is depleted, said automatic connection to the network is automatically carried out while the battery is being charged, or after the battery has been charged to restart said downloading operation of the music delivery server.

5. The music-delivery-available portable terminal apparatus as claimed in any one of claim 2 to claim 4, further comprising;
means for restarting downloading operation in a manual operation instead of said restarting of the downloading operation which is automatically carried out by said interruption of the downloading operation of the musical data.

6. A music-delivery-available portable terminal apparatus connected via a network by way of a wireless manner to a music delivery server which stores thereinto compressed musical data, for downloading said musical data to reproduce the downloaded musical data, said music-delivery-available portable terminal apparatus comprising:
means for, when said interruption of the downloading operation of the musical data happens to occur since another site connected to said network is viewed while said musical data is downloaded, automatically restarting of downloading operation of a remaining part of said musical data within empty time of downloading said viewed data.

7. A portable terminal apparatus capable of reproducing or recording/reproducing musical data, comprising:
a storage unit which has stored both said musical data downloaded from a host server which constitutes a music delivery source, and image data which is related to said musical data downloaded in combination with said musical data;
a control unit for reading out said image data stored in said storage unit; and
a display unit for displaying thereon said image data read out from said control unit.

8. The portable terminal apparatus as claimed in claim 7, wherein said control unit reads out said image data in conjunction with a reproduction of said musical data stored in said storage unit, and displays said read image data on said display unit.

9. The portable terminal apparatus as claimed in claim 7 or claim 8, further comprising:
a designation unit for, when said image data corresponds to a plurality of still image data, a plurality of moving picture data, or a mixture of still image data and moving picture data, designating said image data which is read out from said storage unit by said control unit.

10. The portable terminal apparatus as claimed in claim 9, said designation unit designates either one or a plurality of said image data.

11. The portable terminal apparatus as claimed in any one of claim 7 to claim 10, further comprising:
a selection unit operated in such a manner that when text data related to music such as a note of said musical data other than said image has been stored in said storage unit, said image data, or said text data is selectable,
wherein, in the case that said text data is selected in said selection unit, said control unit reads out said text data instead of said image data, and displays said read text data on said display unit.

12. The portable terminal apparatus as claimed in any one of claim 7 to claim 11, further comprising:
a reception unit for receiving both said musical data and said image data in a wireless manner,
wherein said control unit records both said musical data and said image data, which are received by said reception unit, on said storage unit.

13. The portable terminal apparatus as claimed in any one of claim 7 to claim 12,
wherein said storage unit is a storage medium which is detachably mounted with respect to said portable terminal apparatus.
